Europäisches Patentamt

European Patent Office

Office européen des brevets

(19)

(11) Veröffentlichungsnummer: **0 136 518**

**B1**

(12) **EUROPÄISCHE PATENTSCHRIFT**

(45) Veröffentlichungstag der Patentschrift:
21.09.88

(21) Anmeldenummer: **84110049.8**

(22) Anmeldetag: **23.08.84**

(51) Int. Cl.⁴: **C 08 B 11/20**

(54) **Verfahren zur Reinigung von wässrigen Destillationsrückständen während der Aufbereitung von bei der Herstellung von Celluloseethern anfallenden Flüssigkeiten.**

(30) Priorität: **05.09.83 DE 3331997**

(43) Veröffentlichungstag der Anmeldung:
**10.04.85 Patentblatt 85/15**

(45) Bekanntmachung des Hinweises auf die Patenterteilung:
**21.09.88 Patentblatt 88/38**

(84) Benannte Vertragsstaaten:
**DE FR GB SE**

(56) Entgegenhaltungen:
**DE-A-1 668 347**
**GB-A-2 020 300**

**CHEMICAL ABSTRACTS, Band 89, Nr. 20, 13. November 1978, Seite 303, Nr. 168340x, Columbus, Ohio, US; CLAUSSEN, PER HOLM: "Treatment of effluents from the pulp industry by ultrafiltration and hyperfiltration for recovery of valuable by-products and pollution control" & INT. CONGR. SCAND. CHEM. ENG., PROC., 4TH 1977, (C), 117-45 Schriftreihe des Fonds der chemischen Industrie Heft 24 (1985) S. 71-76 "Membranfilter" Forschungsinstitut Berghof S. 4, 5 und 35 I + EC Product Research + Development Vol. 8 Nr. 1 (1969) S. 82-89 Sumitomo Bakeliti KK Netto Electric Ind. KK.**

(73) Patentinhaber: **HOECHST AKTIENGESELLSCHAFT, Postfach 80 03 20, D-6230 Frankfurt am Main 80 (DE)**

(72) Erfinder: **Wallisch, Heinz, In der Kohlheck 1, D-6228 Eltville 5 (DE)**
Erfinder: **Feicht, Utz-Hellmuth, Dr. Dipl.- Chem., Hubertusstrasse 2, D-6232 Bad Soden- Neuenhain (DE)**
Erfinder: **Kostrzewa, Michael, Dr. Dipl.- Chem., Thorwaldsenanlage 73, D-6200 Wiesbaden (DE)**

(56) Entgegenhaltungen: (Fortsetzung)
**Biomatic, Preparative Molecular Separation Products, Seiten 4, 48 und 54.**

**Die Akte enthält technische Angaben, die nach dem Eingang der Anmeldung eingereicht wurden und die nicht in dieser Patentschrift enthalten sind.**

## Beschreibung

Verfahren zur Reinigung von wäßrigen Destillationsrückständen während der Aufbereitung von bei der Herstellung von Celluloseethern anfallenden Flüssigkeiten.

Die Erfindung betrifft ein Verfahren zur reinigenden Aufbereitung von bei der Herstellung von Celluloseethern anfallenden flüssigen Reaktions- und Auswaschmedien nach der destillativen Abtrennung von organischen Lösemitteln und/oder anderen leichtsiedenden organischen Komponenten.

Celluloseether werden heute häufig so hergestellt, daß bereits in der Alkalisierungsstufe oder spätestens in der Veretherungsstufe organische Lösemittel wie Isopropanol, tert.-Butanol, Aceton, Dimethoxyethan oder auch Gemische aus diesen als Dispergierhilfsmittel zum Einsatz kommen; dies gilt insbesondere für die Herstellung von solchen Natriumcarboxymethylcellulose (NaCMC) - oder Hydroxyethylcellulose(HEC)-Typen, die sich durch eine besonders gleichmäßige Substitution auszeichnen sollen. In zunehmendem Maße wird auch für die Herstellung von Alkyl-hydroxyalkylcellulosen wie Methylhydroxyethylcellulose(MHEC) der Einsatz solcher organischer Lösemittel diskutiert.

Auch bei der Aufarbeitung der rohen (d.h. noch ungereinigten) Celluloseether werden organische Lösemittel wie Isopropanol oder Methanol eingesetzt, beispielsweise zur Entfernung von Salzen oder anderen Reaktionsnebenprodukten vom Wertprodukt Celluloseether. Wie aus Ullmanns Encyklopädie der technischen Chemie, Stichwort "Celluloseäther", Verlag Chemie-Weinheim, 4. Auflage, Band 9, 1975, S. 192 bis 212 zu entnehmen ist, treten - neben der Veretherung der Cellulose aber auch noch Seitenreaktionen auf (siehe beispielsweise: S. 201, rechte Spalte; S. 202, linke Spalte; S. 205, linke Spalte; S. 206, rechte Spalte), beispielsweise Konkurrenzreaktionen zur geplanten Veretherung durch Hydrolyse des Veretherungsmittels oder Angriff des Veretherungsmittels an OH-Gruppen des organischen Lösemittels oder von Nebenprodukten, die zu an sich unerwünschten Produkten führen. So entstehen beispielsweise bei der Methylierungsreaktion mit $CH_3Cl$ als Nebenprodukte Methanol und Dimethylether, bei der Carboxymethylierung mit Monochloressigsäure oder ihren Salzen Glykolat(Hydroxyacetat)ionen oder bei der Hydroxyalkylierung mit Alkylenoxiden Ethylenglykol und Polyethylenglykole.

Bei den immer wichtiger werdenden ökologischen und ökonomischen Anforderungen an eine möglichst geringe Abwasserbelastung der Umwelt ist es aber erforderlich, insbesondere organische Nebenprodukte von chemischen Reaktionen enthaltende Abwässer mit ihrem hohen chemischen Sauerstoffbedarf (CSB) möglichst optimal zu renigen, bevor diese an die Gewässer abgegeben werden. Oftmals führt zwar eine Destillation von solchen flüssigen Reaktions- und/oder Auswaschmedien bereits zum Erfolg, dabei werden aber nur eher leichtsiedende organische Lösemittel, überschüssig eingesetzte Ausgangsstoffe oder Reaktionsnebenprodukte wie $CH_3Cl$, Ethylenoxid, Methanol, Dimethylether oder Isopropanol entfernt, hochsiedende oder nichtflüchtige organische Verbindungen bleiben aber im Destillationsrückstand und damit im Abwasser zurück. Deshalb wird sehr intensiv nach Trenn- und Reinigungsverfahren gesucht, mit deren Hilfe Nebenprodukte von Reaktionen, flüssige Reaktionsmedien und/oder flüssige Auswaschmedien aufgearbeitet werden können. Aus dem Stand der Technik sind dazu folgende Verfahren bekannt geworden:

In dem Verfahren zur Herstellung von Alkali-CMC nach der DE-A 15 18 576 (USA 3 347 855) wird als flüssiges Medium während der Alkalisierung und der Veretherung der Cellulose ein Wasser/Aceton-Gemisch eingesetzt, das nach beendeter Reaktion von den festen Reaktionsprodukten in einem Abscheider abgetrennt und in eine Aceton-Wiedergewinnungskolonne überführt wird. In dieser Kolonne wird überschüssiges Wasser aus dem Wasser/Aceton-Gemisch entfernt und das Aceton wieder in den Reaktionskreislauf zurückgeführt; über die Aufarbeitung der Reaktionsnebenprodukte sind keine Angaben zu entnehmen. Auch in der weiter oben erwähnten Darstellung in Ullmanns Encyklopädie wird zwar eine Destillation erwähnt, aber es ist ebenfalls kein Hinweis über die Aufarbeitung der Nebenprodukte zu entnehmen.

Aus der DE-A 26 36 935 (US-A-4 015 067) ist ein kontinuierliches Verfahren zur Herstellung von Celluloseethern bekannt, bei dem die Reinigung so durchgeführt wird, daß das rohe Produkt mit Wasserdampf in einer Destillationsanlage von seinen leichtsiedenden Anteilen (Nebenprodukte und überschüssige Veretherungsmittel) befreit wird, die dann in einer weiteren Destillationsanlage fraktioniert werden können, um erneut wieder - sofern erwünscht - in den Veretherungsprozeß eingeführt zu werden. Über die Aufarbeitung des jeweiligen Destillationsrückstandes wird nur die Aussage gemacht, daß der Rückstand der Dampfdestillationsanlage (d.h. der von den leichtsiedenden Anteilen befreite rohe Celluloseether) abfiltriert, gewaschen, getrocknet und gemahlen wird.

Das Reinigungsverfahren von wäßrigen Destillationsrückständen, die während der Aufbereitung von bei der Herstellung von Carboxymethylpolysacchariden anfallenden Flüssigkeiten entstehen, wird gemäß der DE-A-31 18 915 so durchgeführt, daß diese Destillationsrückstände an Ionenaustauschern in die Komponenten aufgetrennt werden. Ein solches Verfahren ist aber bei den Destillationsrückständen, die bei der Aufarbeitung von Flüssigkeiten aus den Herstellungsverfahren von nichtionischen oder überwiegend nichtionischen Celluloseethern (insbesondere von Alkyl-hydroxyalkylcellulosen) anfallen, ungeeignet, da dort überwiegend nichtionische Verbindungen abzutrennen sind.

In der DE-C-681 625 wird ein Verfahren beschrieben, bei dem zunächst ein an sich wasserunlöslicher Celluloseether (MC oder NaCMC) in wäßriger NaOH-Lösung aufgelöst und anschließend durch Dialyse an einer Cellulosehydratmembran von dem Lösungsvermittler (NaOH) befreit wird.

Aufgabe der vorliegenden Erfindung ist es, ein ökonomisch und ökologisch günstiges Reinigungsverfahren für den Destillationsrückstand von der Destillation solcher Flüssigkeiten aufzuzeigen, die bei der Herstellung und/oder Reinigung von Celluloseethern anfallen. Durch das Verfahren soll insbesondere der chemische Sauerstoffbedarf des Abwassers gesenkt werden.

Die Erfindung geht aus von einem Verfahren zur reinigenden Aufbereitung von bei der Herstellung von Celluloseethern aus Cellulose, einem Alkalimetallhydroxid und mindestens einem Veretherungsmittel in einem Wasser und gegebenenfalls mindestens ein organisches Lösemittel enthaltenden Medium anfallenden flüssigen Reaktions- und/oder Waschmedien durch destillative Abtrennung der leichtsiedenden organischen Reaktionsnebenprodukte, der Reste an nichtumgesetzten leichtsiedenden organischen Reaktionskomponenten und/oder der gegebenenfalls eingesetzten organischen Lösemittel. Das erfindungsgemäße Verfahren ist dann dadurch gekennzeichnet, daß der wäßrige Glykole enthaltende Destillationsrückstand durch Ultrafiltration mittels einer Polyethersulfonmembran aufbereitet wird. Unter dem Begriff "leichtsiedend" ist dabei zu verstehen, daß diese Stoffe unter dem Siedepunkt des Wassers von 100°C sieden bzw. in Azeotropen unter dem Siedepunkt des Wassers mitdestillieren.

Bezüglich der Technologie der Ultrafiltration und der dabei verwendeten Wirkstoffe und Anlagen wird auf Ullmanns Encyklopädie der technischen Chemie, Stichwort "Membranen", Verlag Chemie-Weinheim, 4. Auflage, Band 16, 1978, S. 515 bis 535 (insbesondere S. 528, rechte Spalte bis S. 529, rechte Spalte einschl.) verwiesen. Ultrafiltrationsanlagen und -verfahren werden u.a. auch in der DE-B-22 03 008, CH-A-542 639 (=US-A-3 872 015), US-A-3 974 068, DE-B-28 08 022 oder DE-C-1 029 45 317 beschrieben; keiner dieser Veröffentlichungen ist jedoch die spezielle Problematik der reinigenden Aufarbeitung von flüssigen Reaktions- und/oder Waschmedien der Celluloseetherherstellung oder die Kombination einer Destillations- mit einer Ultrafiltrationsstufe zu entnehmen.

In einer bevorzugten Ausführungsform des erfindungsgemäßen Verfahrens enthält der wäßrige Destillationsrückstand vor Durchführung der Ultrafiltration Salze, einen Celluloseanteil und gegebenenfalls hochsiedende organische Reaktionsnebenprodukte und/oder nichtumgesetzte organische Reaktionskomponenten. Der Celluloseether ist insbesondere ein nichtionischer Typ wie Hydroxyalkyl ($C_2$ bis $C_4$) cellulose, Alkyl ($C_1$ und $C_2$) cellulose und einer deren Mischether oder ein solcher Typ, der überwiegend (d.h. insbesondere zu mehr als 75 Gew.-%) einen der genannten Substituenten, aber in geringerem Maße (d.h. insbesondere bis zu 25 Gew.-%) auch ionische Substituenten wie Carboxyalkyl ($C_1$ oder $C_2$)-, N,N-Dialkyl($C_1$ bis $C_3$)-aminoalkyl($C_1$ bis $C_4$)-, Phosphonomethyl- oder Sulfonoethylreste trägt; bevorzugt ist der Celluloseether eine Alkyl($C_1$ und $C_2$)-hydroxyalkyl($C_2$ bis $C_4$)cellulose, bei dessen Herstellung als Veretherungsmittel Methyl- oder Ethylchlorid und Ethylen-, Propylen- und/oder Butylenoxid zum Einsatz kommen. Als Membranmaterial wird bei der Ultrafiltration im erfindungsgemäßen Verfahren insbesondere ein solches aus Polyethersulfon eingesetzt, d.h. ein aus p-Phenyleneinheiten aufgebautes Polymeres, dessen Einheiten alternierend durch Sulfon- oder Ethergruppen verbunden sind und das sehr stabil über einen pH-Bereich von 1 bis 14 ist; es sind aber auch andere Materialien geeignet, soweit sie die vorgegebenen Anforderungen erfüllen.

Im vorliegenden Verfahren kommt beispielsweise ein Rundplattenmodul zum Einsatz, der im wesentlichen aus einem zwischen zwei Endplatten gespannten Stapel aus Tragplatten (insbesondere kreisförmig) und Leitplatten besteht, die abwechselnd gestapelt übereinander angeordnet sind. Die Tragplatten sind beidseitig mit Drainageschichten und Membranen belegt und haben in der Mitte eine Bohrung als Wasserdurchlass. Die Leitplatten dienen zur Führung des Rohwassers. Als geeignet hat sich beispielsweise ein "RP-Modul" der GKSS-Forschungszentrum Geesthacht GmbH/Hamburg (DE) herausgestellt, grundsätzlich vergleichbare Geräte werden beispielsweise von den Firmen Forschungsinstitut Berghof GmbH/Tübingen (DE) oder A/S De Danske Sukkerfabrikker, Nakskov (DK) geliefert. Andere geeignete Module sind Wickel(Spiral)-Module oder Rohrmodule.

Das erfindungsgemäße Verfahren stellt eine wichtige Stufe in einem der großtechnisch zum Einsatz kommenden Herstellungsverfahren für Celluloseether dar. Bei der Herstellung von einer als repräsentatives Beispiel ausgesuchten Methyl-hydroxyethylcellulose(MHEC) aus Cellulose, Methylchlorid, Ethylenoxid, wäßriger NaOH-Lösung und gegebenenfalls in Anwesenheit eines inerten organischen Lösemittels wie Dimethoxyethan fallen während der Reaktion und nach der Auswaschung der Roh-MHEC mit heißem Wasser im flüssigen Reaktions- und Waschmedium insbesondere folgende Produkte an: NaCl, Methanol, Dimethylether, niedere und höhere, teilweise methylierte Ethylenglykole, Methylchlorid, Ethylenoxid, gegebenenfalls ein organisches Lösemittel wie Dimethoxyethan und ein Celluloseanteil aus möglicherweise zu niedrig oder zu hoch substituierten Celluloseethermolekülen oder aus Celluloseethern zu niedriger Kettenlänge. Eine vergleichbare Zusammensetzung kann auch nach der Herstellung und/oder Reinigung anderer Celluloseethertypen anfallen, sie enthält dann beispielsweise andere Salze wie Natriumacetat oder -nitrat, andere organische Lösemittel wie Ethanol, Isopropanol, Aceton oder Diethylether, Propylenglykole usw. Das flüssige Reaktions- und Waschmedium wird dann nach Abtrennung der festen Rückstände (im wesentlichen aus dem Wertstoff Celluloseether, der gegebenenfalls noch gewisse Salzanteile enthält) zuerst einer Destillation unterzogen, bei der die leichtsiedenden organischen Reaktionsnebenprodukte wie Methanol, Dimethylether, Ethylenglykol, die (im Regelfall im molaren Überschuß eingesetzten) nichtumgesetzten leichtsiedenden organischen Reaktionskomponenten wie Methylchlorid, Ethylenoxid und die gegebenenfalls eingesetzten organischen Lösemittel wie Dimethoxyethan abdestillieren und beispielsweise durch eine fraktionierte Destillation in die Komponenten aufgetrennt werden können.

Die sich anschließende Ultrafiltration wird mit dem Rückstand der Destillation durchgeführt, der im wesentlichen (bezogen auf das vorstehende Beispiel) NaCl, einen Celluloseanteil und mittel- und höhermolekulare Ethylenglykole bzw. mittel- und höhermolekulare Ethylenglykolderivate enthält. Die Ultrafiltration kann diskontinuierlich oder auch kontinuierlich durchgeführt werden. Bei der diskontinuierlichen Fahrweise kann mit einem oder mehreren Ultrafiltrations-Modulen gearbeitet werden, denen eine Vorlage vorgeschaltet wird. Das dem oder den Modulen zu entnehmende Permeat, das im CSB-Wert verringert worden ist (d.h. einen niedrigeren Feststoffgehalt aufweist), wird zusammengefaßt und kann der Abwasserreinigungsanlage zugeführt werden. Das Konzentrat, das in der Endstufe des Verfahrens im vorliegenden Fall im wesentlichen NaCl und einen Celluloseanteil (beispielsweise in etwa gleicher Größenordnung) enthält, wird nach Verlassen eines ersten Moduls dann - sofern vorhanden - noch einem zweiten Modul zugeführt, wonach sich gegebenenfalls noch weitere anschließen können; nach Verlassen des letzten Moduls wird es wieder der Vorlage zugeführt. Dieses Verfahren wird so lange durchgeführt, bis eine angestrebte Endkonzentration des Konzentrats erreicht ist, die jedoch nicht zu hoch zu treiben ist, da mit zunehmender Konzentration der Rückhalt an solchen Verbindungen, die für den CSB-Wert verantwortlich sind, abnimmt und bei einer Konzentrierung im Bereich von etwa 1 : 20 bis 1 : 27 praktisch gegen Null geht, d.h. die CSB-Werte des Permeats nähern sich bei noch höheren Konzentrationen in etwa wieder den CSB-Werten des Ausgangsabwassers. Bei einer Regenerierung der beim Verfahren verwendeten Membranen können konventionelle Reiniger wie wäßrige Citronen- oder Salpetersäure-Lösungen zum Einsatz kommen. Mit dem erfindungsgemäßen Verfahren können die CSB-Werte um etwa 3 bis 5 g Sauerstoff pro ltr. reduziert werden. Bei der kontinuierlichen Fahrweise werden mehrere Stufen, die jeweils wiederum auch aus mehreren Modulen bestehen können, zusammengefaßt, wobei das Konzentrat einer ersten Ultrafiltrationsstufe dann nicht wieder in eine Vorlage zurückgeführt, sondern in eine zweite Ultrafiltrationsstufe mit kleinerer Leistung überführt wird. Das die zweite Stufe verlassende Konzentrat wird dann entsprechend einer noch kleineren dritten Stufe zugeführt, wonach auch noch weitere Stufen angeschlossen werden können; die die jeweilige Stufe verlassenden Permeate werden unmittelbar der Abwasserreinigungsanlage zugeführt. Bei beiden Verfahrensvarianten sind die CSB-Werte der Permeate in der Größenordnung von 20 % reduziert, die Permeate sind klare Flüssigkeiten. Die nach der Destillation im durch Ultrafiltration aufzuarbeitenden Destillationsrückstand neben dem oder den Salzen und dem Celluloseanteil gegebenenfalls noch vorhandenen Glykole und Glykolderivate werden bei der Ultrafiltration nicht angereichert, so daß sie ebenso wie das Salz sowohl im Permeat als auch im Konzentrat der Ultrafiltration zu finden sind. Im festen Rückstand des Konzentrats, der beispielsweise durch Sprühtrocknen des Konzentrats erhalten werden kann, sind als nachweisbare Komponenten Salz und der entsprechende Celluloseether (z. B. MHEC) vorhanden, so daß dieser Rückstand einen noch weiterverarbeitbaren Wertstoff darstellt. Neben der Verringerung der CSB-Werte des Abwassers der Celluloseetherherstellung und -reinigung kann durch das erfindungsgemäße Verfahren auch noch die Ausbeute an Wertstoff bei der Celluloseetherherstellung erhöht werden.

**Beispiel**

Bei der diskontinuierlichen Fahrweise wird von drei hintereinandergeschalteten Plattenmodulen für die Ultrafiltration ausgegangen, die 5,4 m$^2$ Membranfläche aus Polyethersulfon-Membranen (z.B. ®Nadir-Membranen von Kalle Niederlassung der Hoechst AG, Kenndaten: Temperaturbelastbarkeit von 0 bis 90°C, Druckbelastbarkeit von 0 bis 10 bar, pH-Bereich von 1 bis 14) aufweisen. Das der Ultrafiltration zu unterwerfende Abwasser (Destillationsrückstand) einer Anlage zur Herstellung von MHEC wird in eine 3 m$^3$ fassende Vorlage eingefüllt und über ein Vorfilter in die Module eingegeben. Bei einer zehnmaligen Neufüllung der Vorlage und einer Betriebstemperatur von etwa 30 bis 40 °C betragen die Permeatmenge etwa 28,7 m$^3$ und die Konzentratmenge etwa 1,3 m$^3$ bei einer

Ultrafiltrationsdauer von etwa 140 h bei einer Konzentrierung von etwa 1 zu 25, wobei diese Konzentrierung durch Rückführung des Konzentrats nach dem dritten Modul in die Vorlage und erneute Durchführung(en) der Ultrafiltration erreicht wird. Es wird ein Druckbereich während der Ultrafiltration in den Modulen von etwa 6 bis 10 bar angestrebt, u.a. um einen ausreichenden Flux zu erzielen. Die Reduzierung der CSB-Werte im Abwasser liegt bei diesen Versuchen zwischen 3,3 und 6,0 g Sauerstoff pro ltr., was für das jeweilige Abwasser eine Reduzierung um 13,5 bis 28,1 Gew.-% bedeutet.

Beim Übergang von der diskontinuierlichen zur kontinuierlichen Fahrweise werden 5 Ultrafiltrationsstufen mit abnehmendem Durchsatz von 30 m³/h über 15 m³/h, 7,5 m³/h, 3,75 m³/h zu 1,875 m³/h eingesetzt. Auch bei dieser Verfahrensvariante liegt die Reduktion der CSB-Werte im beabsichtigten Rahmen (mittlere Reduktion bei etwa 3,6 g Sauerstoff pro ltr., entsprechend etwa 21 %), wobei die tatsächliche Reduktion von Stufe zu Stufe abnimmt.

Vor Durchführung der Ultrafiltration liegt der Feststoffgehalt des Abwassers bei etwa 6 bis 7 Gew.-% und nach der Konzentrierung des Konzentrats bei etwa 10 bis 12 Gw.-%, wobei der Anteil organischer Stoffe bei etwa 50 bis 55 Gew.-% und der Anteil NaCl bei etwa 45 bis 50 Gew.-% liegt.

**Patentansprüche**

1. Verfahren zur reinigenden Aufbereitung von bei der Herstellung von Celluloseethern aus Cellulose, einem Alkalimetallhydroxid und mindestens einem Veretherungsmittel in einem Wasser und gegebenenfalls mindestens ein organisches Lösemittel enthaltenden Medium anfallenden flüssigen Reaktions- und/oder Waschmedien durch destillative Abtrennung der leichtsiedenden organischen Reaktionsnebenprodukte, der Reste an nichtumgesetzten leichtsiedenden organischen Reaktionskomponenten und/oder der gegebenenfalls eingesetzten organischen Lösemittel, dadurch gekennzeichnet, daß man den wäßrigen, Glykole enthaltenden Destillationsrückstand durch Ultrafiltration mittels einer Polyethersulfonmembran aufbereitet.

2. Verfahren nach Anspruch 1, dadurch gekennzeichnet, daß der wäßrige Destillationsrückstand vor Durchführung der Ultrafiltration Salze, einen Celluloseetheranteil, Glykole und gegebenenfalls hochsiedende organische Reaktionsnebenprodukte und/oder nichtumgesetzte organische Reaktionskomponenten enthält.

3. Verfahren nach Anspruch 1 oder 2, dadurch gekennzeichnet, daß man den Destillationsrückstand aus Alkyl($C_1$ und $C_2$)hydroxyalkyl($C_2$ bis $C_4$)cellulose-ethern aufbereitet, bei deren Herstellung als Veretherungsmittel Methyl- oder Ethylchlorid und Ethylen-, Propylen- und/oder Butylenoxid verwendet werden.

**Claims**

1. Process for the purification treatment of liquid reaction and/or washing media obtained in the preparation of cellulose ethers from cellulose, an alkali metal hydroxide and at least one etherifying agent, in a medium comprising water and, if appropriate, at least one organic solvent, by separating the low-boiling organic by-products of the reaction, the residual non-reacted low-boiling organic reaction components and/or the optionally employed organic solvents in a distillation process, wherein the aqueous distillation residue containing glycols is treated by ultrafiltration using a polyether sulfone membrane.

2. A process as claimed in claim 1, wherein the aqueous distillation residue which is present before carrying out ultrafiltration comprises salts, a cellulose ether constituent, glycols and possibly high-boiling organic by-products of the reaction and/or non-reacted organic reaction components.

3. A process as claimed in claim 1 or claim 2, wherein the distillation residue from alkyl($C_1$ and $C_2$) hydroxyalkyl($C_2$ to $C_4$) cellulose ethers is treated, in the preparation of which cellulose ethers methyl chloride or ethyl chloride and ethylene oxide, propylene oxide and butylene oxide are used as etherifying agents.

**Revendications**

1. Procédé de traitement pour la purification de milieux réactionnels liquides et/ou de milieux liquides de lavage produits lors de la préparation d'éthers de cellulose à partir de cellulose, d'un hydroxyde de métal alcalin, et d'au moins un agent d'éthérification, dans un milieu contenant de l'eau et éventuellement au moins un solvant organique, par séparation par distillation des sous-produits organiques de réaction, à bas points d'ébullition, des résidus de composants réactionnels organiques n'ayant pas réagi, à bas points d'ébullition, et/ou des solvants organiques éventuellement utilisés, caractérisé en ce que l'on traite par ultrafiltration, au moyen d'une membrane à base de polyéthersulfone, le résidu aqueux de distillation, contenant des glycols.

2. Procédé selon la revendication 1, caractérisé en ce que le résidu aqueux de distillation contient, avant la mise en oeuvre de l'ultrafiltration, des sels, une fraction constituée d'éthers de cellulose, des glycols et éventuellement des sous-produits organiques de réaction, à hauts points d'ébullition, et/ou des composants réactionnels organiques n'ayant pas réagi.

3. Procédé selon la revendication 1 ou 2, caractérisé en ce que l'on traite le résidu de distillation provenant de la production d'éthers de type alkyl($C_1$-$C_2$)hydroxyalkyl-($C_2$-$C_4$)-cellulose, dans la préparation desquels on utilise en tant qu'agents d'éthérification le chlorure de méthyle ou d'éthyle et l'oxyde d'éthylène, de propylène et/ou de butylène.